# EUROPEAN PATENT APPLICATION

(11) **EP 2 764 779 A2**
(43) Date of publication of application: **13.08.2014**
(21) Application number: 14153429.7
(22) Date of filing: 31.01.2014
(51) Int. Cl.: A23K 1/00, A23K 1/18

(54) **Pizza for pet and manufacturing method thereof**

(30) Priority: 06.02.2013 CN 201310047668
(71) Applicant: Yantai China Pet Foods Co., Ltd., Yantai Shandong 264003 (CN)
(72) Inventor: Li, Xue, 264003 Yantai (CN); Zhu, Fujuan, 264003 Yantai (CN); Zhao, Cuiping, 264003 Yantai (CN)
(74) Representative: Hanna, Peter William Derek

(57) **Abstract**

The invention relates to a pizza for a pet and a manufacturing method thereof, belonging to the technical field of pet foods and manufacturing methods thereof. A pizza flour cake comprises the following raw materials: 50 to 160 parts of livestock meat, 0 to 160 parts of fish, 30 to 38 parts of glycerin, 2 to 8 parts of crystallized sorbitol, 1 to 6 parts of sodium lactate, 10 to 20 parts of peanut protein, 12 to 20 parts of isolated soy protein, 5 to 10 parts of corn starch, 1 to 5 parts of cheese powder and 0.4 to 1 part of garlic powder; and a pizza top layer stuffing comprises the following raw materials: 80 to 110 parts of chicken breast meat, 12 to 18 parts of glycerin, 2 to 5 parts of crystallized sorbitol, 1 to 4 parts of sodium lactate, 0.2 to 0.8 part of composite phosphate and 20 to 50 parts of water. The manufacturing method comprises the following steps: Step 1: preparing the materials for the pizza top layer stuffing; Step 2: preparing the pizza flour cake; Step 3: molding the flour cake; Step 4: preparing a meat mud; Step 5: preparing the pizza top layer stuffing; Step 6: baking; and Step 7: cooling and cutting. The invention uses meat as a main raw material and grains as auxiliary materials, thus providing balanced nutrition for the pet and creating a new pet food form while ensuring a taste and a mouthfeel.

## Description

### Technical field of the invention

The invention relates to a pizza for a pet and a manufacturing method thereof, and in particular to a pizza for a pet using meat as a main raw material and a manufacturing method thereof, belonging to the technical field of pet foods and manufacturing methods thereof.

### Background of the invention

Pet lovers are naturally more concerned about pet foods. Therefore, the development of pet treats, which has become increasingly sophisticated, is also drawing more and more on the varieties and manufacturing methods of human foods. Pizza is enjoyed by a considerable majority of consumers. A pizza for human consumption is generally manufactured by covering a round fermented flour cake with various delicious ingredients, and baking the flour cake in an oven. However, such a method is not applicable to manufacturing of a pet food. On one hand, the fermented flour cake is not attractive for a pet, and the ingredients covered on the pizza for human consumption are not suitable for the appetite of the pet. On the other hand, such a pizza product is inconvenient for circulation.

### Summary of the invention

The objective of the invention is to solve the disadvantages existing in the prior art and provide a new form of pizza for a pet and a manufacturing method thereof to meet not only the palatability, but also nutritional requirements of the pet, thereby extending the varieties of existing pet foods.

To realize the objective above, the invention applies the following technical solution:
a pizza for a pet is special in that the pizza base (herein called a "flour cake") includes the following raw materials in parts by weight:
50 to 160 parts of livestock meat, 0 to 160 parts of fish, 30 to 38 parts of glycerin, 2 to 8 parts of crystallized sorbitol, 1 to 6 parts of sodium lactate, 10 to 20 parts of peanut protein, 12 to 20 parts of isolated soy protein, 5 to 10 parts of corn starch, 1 to 5 parts of cheese powder and 0.4 to 1 part of garlic powder;
the livestock meat is at least one of chicken, duck, turkey, rabbit meat, pork, mutton, beef and venison;

To further realize the objective of the invention, the pizza flour cake further includes one or more of the following additives:
0.2 to 2 parts of salt, 0.01 to 2 parts of cochineal carmine, 0.01 to 2 parts of titanium oxide, 0.01 to 2 parts of β-carotene, 0.01 to 2 parts of cheese flavor and 0.01 to 2 parts of milk flavor.

A pizza top layer stuffing includes the following raw materials in parts by weight:
80 to 110 parts of chicken breast meat, 12 to 18 parts of glycerin, 2 to 5 parts of crystallized sorbitol, 1 to 4 parts of sodium lactate, 0.2 to 0.8 part of composite phosphate and 20 to 50 parts of water.

The pizza top layer stuffing further includes one or more of the following raw materials:
2 to 10 parts of air-dried vegetable, 2 to 8 parts of sliced ham, 6 to 15 parts of cheese granules, 6 to 15 parts of red and white shreds and 6 to 15 parts of shredded beef.

The air-dried vegetable is manufactured by rapidly dehydrating a fresh vegetable at low temperature.

A manufacturing method of the sliced ham includes:
raw materials in parts by weight:
2 to 15 parts of chicken breast meat, 1 to 5 parts of beef, 2 to 8 parts of glycerin, 0.1 to 0.5 part of crystallized sorbitol, 2 to 8 parts of peanut protein, 2 to 6 parts of flour, 0.1 to 1 part of isolated soy protein, 0.1 to 0.4 part of composite phosphate, 0.01 to 0.04 part of salt, 0.01 to 0.04 of sodium polyacrylate, 0.001 to 0.005 part of cochineal carmine, 0.001 to 0.005 part of titanium oxide, 0.0001 to 0.001 part of potassium sorbate, and 0.8 to 2 parts of water;
technological operation steps:
weigh 2 to 8 parts of chicken breast meat, 1 to 5 parts of beef, 2 to 4 parts of glycerin, 2 to 5 parts of peanut protein, 2 to 4 parts of flour, 0.1 to 0.6 part of isolated soy protein, 0.05 to 0.1 part of composite phosphate, 0.01 to 0.04 part of salt, 0.0001 to 0.001 part of potassium sorbate, 0.01 to 0.04 part of sodium polyacrylate, 0.001 to 0.005 part of cochineal carmine, and 0.8 to 2 parts of water; cut and blend uniformly in a cutting and blending machine to form a uniform red material; cut and blend uniformly other remaining raw materials in the same way to form a white material;
cut the two uniformly cut and blended materials in the cutting and blending machine again for one to two rounds to roughly mix the materials in two colours, knead the mixed materials into flat strips, freeze the flat strips quickly and then cut the flat strips into 1 to 5mm thick slices, set the cut slices into a net in a single layer, bake the net in a baking house at 50°C to 70°C, and take out the net when the net is baked to a water content of 20% to 40%.

A manufacturing method of the cheese granules includes:
raw materials in parts by weight:
8 to 15 parts of modified starch, 8 to 15 parts of corn starch, 2 to 6 parts of flour, 1 to 5 parts of isolated soy protein, 2 to 6 parts of glycerin, 0.1 to 0.5 part of composite phosphate, 0.1 to 0.5 part of sucrose fatty acid ester, 0.3 to 1 part of guar gum, 0.01 to 0.03 part of β-carotene, 0.08 to 0.2 part of cheese flavor and 18 to 26 parts of water;
technological operation steps:
add other components besides the cheese flavor of the raw materials to a cutting and blending machine in turn to be cut and blended uniformly, extrude the uniformly cut materials into a 2 to 5mm thick big cake with an extruder, steam the big bake for 8 to 20 minutes in a steamer, control the temperature at 90°C to 100°C, then bake the steamed big cake in a baking house at about 50°C to 60°C, take out the big cake when the water content is 20% to 32% and cut the big cake into cheese granules, then uniformly spray the cheese flavor on the cheese granules.

A manufacturing method of the red and white shreds includes:
raw materials in parts by weight:
8 to 14 parts of chicken breast meat, 0.2 to 1 part of corn starch, 2 to 6 parts of glycerin, 0.2 to 1 part of crystallized sorbitol, 0.1 to 0.5 part of sodium lactate, 0.01 to 0.06 part of salt, 0.8 to 2 parts of isolated soy protein, 1 to 2 parts of peanut protein, 0.0005 to 0.001 part of potassium sorbate, 0.04 to 1 part of garlic powder, 0.08 to 0.2 part of cheese powder, 0.001 to 0.003 part of cochineal carmine, 0.002 to 0.008 part of titanium oxide and 0.001 to 0.005 part of β-carotene;
technological operation steps:
uniformly mix the raw materials except the cochineal carmine, the cheese powder, the titanium oxide, and the β-carotene in a cutting and blending machine, equally divide the materials into two parts, one of which is added with cochineal carmine and the other one is added with cheese powder, titanium oxide and β-carotene; uniformly cut and blend the materials in the two parts respectively;
respectively roll the materials of the two parts into big cakes, then compact the two big cakes together, bake a combined big bake in a baking house at 50°C to 70°C, take out the big cake when the water content is 20% to 42% and cut the big cake into small shreds.

A manufacturing method of the shredded beef includes:
raw materials in parts by weight:
   Group 1: 3 to 8 parts of chicken breast meat, 3 to 8 parts of beef, 2 to 6 parts of glycerin, 0.2 to 0.8 part of sodium lactate, 0.3 to 1 part of crystallized sorbitol, 1 to 2 parts of peanut protein, 0.5 to 1.2 parts of isolated soy protein, 0.3 to 0.7 part of corn starch, 0.001 to 0.008 part of cochineal carmine, 0.1 to 0.6 part of a flavoring agent, 0.01 to 0.06 part of composite phosphate and 0.01 to 0.03 part of sodium polyacrylate;
   Group 2: 1 to 4 parts of chicken breast meat, 0.3 to 0.6 part of glycerin, 0.01 to 0.05 part of composite phosphate, 1 to 1.6 parts of flour, 0.001 to 0.008 part of sodium polyacrylate, 0.001 to 0.005 part of titanium oxide and 0.0001 to 0.0004 part of potassium sorbate;
technological operation steps:
uniformly mix the raw materials in Group 1 and the raw materials in Group 2 in a cutting and blending machine respectively, then simultaneously cut the materials of the two parts in the cutting and blending machine for one to two rounds to form a red and white material, roll the material into a 2 to 5mm thick big cake, bake the big cake in a baking house at 50°C to 70°C until the water content is about 20% to 38%, and cut the baked big cake into shreds.

A manufacturing method of a pizza for a pet is special in that it includes the following steps:
Step 1: prepare materials for a pizza top layer stuffing: prepare sliced ham, cheese granules, red and white granules or shredded beef for preparing the pizza top layer stuffing;
Step 2: prepare a pizza flour cake, roughly mince, cut and blend livestock meat and fish into meat mud, add glycerin, crystallized sorbitol, sodium lactate, peanut protein, isolated soy protein, corn starch and garlic powder, cut and blend uniformly, divide the materials into two equal parts consisting of Part A and Part B, add cochineal carmine to Part A, and add cheese powder, β-carotene and titanium oxide to Part B, cut and blend respectively until the materials are mixed uniformly;
Step 3: mould the flour cake: respectively roll the materials of the two parts into cakes, or place a single layer of a rolled flour cake, or laminate the flour cakes layer by layer and compact the layers;
Step 4: prepare meat mud: mince chicken meat into a meat mud, then add composite phosphate, glycerin, crystallized sorbitol, sodium lactate, and sodium polyacrylate in turn, continue to cut and blend until a uniform meat mud is formed;
Step 5: prepare the top layer stuffing: uniformly mix the prepared meat mud with air-dried vegetable or sliced ham, cheese granules, red and white shreds, and shredded beef etc., and coat them on the cakes prepared in Step 3;
Step 6: bake: bake a shaped pizza in a baking house until the water content meets a requirement;
Step 7: cool and cut: cool the baked pizza to below 40°C and cut the pizza into an appropriate shape, and package the pizza to obtain a target product.

In Step 3 of molding the flour cake, when laminated, the rolled flour cakes are put according to a sequence of Cake A-Cake B or Cake B-Cake A-Cake B.

The temperature of the baking house in the baking process of Step 6 is 50°C to 80°C, and the water content of the finished baked product is below 40%.

To further realize the objective of the invention, the materials of Part A and Part B in Step 2 may be compounded respectively, and cut and blended separately.

Compared with the prior art, the invention has the following positive effect: meat is used as a main raw material and grains are used as auxiliary materials, thus providing balanced nutrition for a pet and creating a new pet food form while ensuring a taste and a mouthfeel. At the same time, the concept of pizza, which is very attractive for consumers, stimulates consumers' purchase desire.

### Detailed description of the invention

The specific embodiments described hereinafter of the invention are used for further describe the structure of the invention.

### Embodiment 1

### Preparation of raw materials:

Group A: 130kg of chicken breast meat, 43.6kg of glycerin, 5.2kg of crystallized sorbitol, 0.26kg of sodium lactate, 0.04kg of composite phosphate, 0.48kg of salt, 16.8kg of peanut protein, 16.8kg of isolated soy protein, 7.2kg of corn starch, 0.72kg of garlic powder, 2kg of cheese powder, 0.02kg of cochineal carmine, 0.06kg of titanium oxide, 0.03kg of β-carotene, 4kg of water, 4kg of air-dried peas, and 4kg of air-dried carrot.
Group B: 9kg of chicken breast meat, 2.5kg of beef, 2.3kg of glycerin, 0.2kg of crystallized sorbitol, 4kg of peanut protein, 4.25kg of flour, 0.6kg of isolated soy protein, 0.125kg of composite phosphate, 0.03kg of salt, 0.013kg of sodium polyacrylate, 0.003kg of cochineal carmine, 0.004kg of titanium oxide and 0.0008kg of potassium sorbate.

### Technological operation:

Step 1: preparation of sliced ham: uniformly cut and blend 5kg of chicken breast meat, 2.5kg of beef, 1.5kg of glycerin, 3kg of peanut protein, 2.25kg of flour, 0.6kg of isolated soy protein, 0.075kg of composite phosphate, 0.03kg of salt, 0.0005kg of potassium sorbate, 0.01 kg of sodium polyacrylate and 1.5kg of water of the raw materials of Group B in a cutting and blending machine to form a uniform red material, uniformly cut and blend the remaining raw materials in Group B in the same way to form a white material, cut the two uniformly-cut materials in the cutting and blending machine again for one to two rounds, roughly mix the materials of the two colours, knead the mixed materials into flat strips with a cross section as high as about 2cm and as wide as about 4cm, rapidly freeze the kneaded strips and then cut the strips into about 2mm thick slices, set the cut slices into a net in a single layer, bake the net in a baking house at 65°C until the water content is about 30%, and take out the net to be used in a subsequent step;
Step 2: uniformly cut and blend 120kg of chicken breast meat, 42kg of glycerin, 4.8kg of crystallized sorbitol, 0.24kg of sodium lactate, 0.48kg of salt, 16.8kg of peanut protein, 16.8kg of isolated soy protein, 7.2kg of corn starch, and 0.72kg of garlic powder of the ingredients of Group A in the cutting and blending machine, divide the materials into two equal parts, add 0.019kg of cochineal carmine to Part A, and cut and blend uniformly, add 2kg of cheese powder, 0.06kg of titanium oxide, and 0.03kg of β-carotene to Part B, and cut and blend uniformly;
Step 3: roll the materials of Part A into a cake in a 6mm-thick circular mould, similarly roll the materials of Part B into a cake in a 2mm-thick circular mould, and laminate and compact three layers of cakes according to a sequence of Cake B-Cake A-Cake B;
Step 4: uniformly mix the remaining raw materials besides the air-dried peas and the air-dried carrot in Group A with the cutting and blending machine, and take them out of the cutting and blending machine to obtain a pizza top layer stuffing;
Step 5: uniformly mix the pizza top layer stuffing prepared in Step 4 with the air-dried peas, and the air-dried carrot, uniformly coat the mixed materials on a cake formed in Step 3, and then uniformly paste six pieces of sliced ham prepared in Step 1 on the cake;
Step 6: bake a shaped pizza cake in a baking house at about 65°C until the water content is about 30%;
Step 7: cool the baked pizza cake to room temperature and then cut the pizza cake into sectors having an included angle of 60 degrees and package to obtain a target product.

### Embodiment 2

### Preparation of raw materials:

Group A: 120kg of rabbit meat, 10kg of chicken breast meat, 43.6kg of glycerin, 5.2kg of crystallized sorbitol, 0.26kg of sodium lactate, 0.04kg of composite phosphate, 0.48kg of salt, 16.8kg of peanut protein, 16.8kg of isolated soy protein, 7.2kg of corn starch, 0.72kg of garlic powder, 0.02kg of cochineal carmine, and 4kg of water.
Group B: ingredients the same as those in Group B of the first embodiment;
Group C: 12kg of modified starch, 12kg of corn starch, 4.8kg of flour, 2.4kg of isolated soy protein, 4.8kg of glycerin, 0.24kg of composite phosphate, 0.24kg of sucrose fatty acid ester, 0.6kg of guar gum, 24g of β-carotene, 24kg of water and 120g of cheese flavor.

### Technological operation:

Step 1: preparation of sliced ham: the same as Step 1 in the first embodiment;
Step 2: preparation of cheese granules: add other ingredients besides the cheese flavor of the raw materials in Group C to a cutting and blending machine to be cut and blended uniformly, extrude the uniformly-cut materials into a 3mm thick big cake with an extruder, steam the big cake in a steamer at 100°C for 10 minutes, then bake the steamed big bake in a baking house at about 55°C until the water content is about 28%, take out the big cake and cut the big cake into 1mm*1mm cheese granules, and then uniformly spray the cheese flavor on the cheese granules to be used in a subsequent step;
Step 3: uniformly cut and blend 120kg of rabbit meat, 42kg of glycerin, 4.8kg of crystallized sorbitol, 0.24kg of sodium lactate, 0.48kg of salt, 16.8kg of peanut protein, 16.8kg of isolated soy protein, 7.2kg of corn starch, 0.72kg of garlic powder, and 0.019kg of cochineal carmine of the ingredients of Group A in the cutting and blending machine;
Step 4: roll the uniformly-cut and blended materials into a big cake with a square mould to form a layer of pizza flour cake;
Step 5: uniformly mix the remaining raw materials in Group A in the cutting and blending machine, and take them out from the cutting and blending machine to obtain a pizza top layer stuffing;
Step 6: coat a thin layer of the top layer stuffing prepared in Step 5 on the cake formed in Step 4, then uniformly spread the cheese granules prepared in Step 2 on the top layer stuffing, press lightly to realize tight bonding, then stick six pieces of sliced ham prepared in Step 1 on the cheese granules;
Step 7: the same as Step 6 in the first embodiment;
Step 8: cool the baked pizza cake to room temperature, then cut the pizza cake into isosceles triangles with an included angle of 45 degrees, and package to obtain a target product.

### Embodiment 3

### Preparation of raw materials:

Group A: 60kg of beef, 60kg of fish, 10kg of chicken breast meat, 43.6kg of glycerin, 5.2kg of crystallized sorbitol, 0.26kg of sodium lactate, 0.04kg of composite phosphate, 0.48kg of salt, 16.8kg of peanut protein, 16.8kg of isolated soy protein, 7.2kg of corn starch, 0.72kg of garlic powder, 0.02kg of cochineal carmine, 0.06kg of titanium oxide, 0.03kg of β-carotene, and 4kg of water.
Group B: 10kg of chicken breast meat, 0.6kg of corn starch, 3.5kg of glycerin, 0.4kg of crystallized sorbitol, 0.2kg of sodium lactate, 0.04kg of salt, 1.4kg of isolated soy protein, 1.4kg of peanut protein, 0.75g of potassium sorbate, 0.06kg of garlic powder, 1.6g of cochineal carmine, 0.1kg of cheese powder, 5g of titanium oxide and 2.5g of β-carotene.

### Technological operation:

Step 1: preparation of red and white shreds: uniformly mix the chicken breast meat with the raw materials besides the cochineal carmine, the cheese powder, the titanium oxide and the β-carotene of Group B in a cutting and blending machine, equally divide the materials into two parts, one of which is added with cochineal carmine and the other part is added with the cheese powder, the titanium oxide and the β-carotene, and uniformly cut and blend the materials in the two parts respectively, respectively roll the materials of the two parts into big cakes with a 7mm thick rectangular mould, combine and compact the two big cakes, bake a combined big bake in a baking house at 65°C until the water content is about 30%, take out the big cake and cut the big cake into 1mm*1mm shreds to be used in a subsequent step;
Step 2: uniformly cut and blend 60kg of beef, 21 kg of glycerin, 2kg of crystallized sorbitol, 0.1 kg of sodium lactate, 0.015kg of composite phosphate, 0.24kg of salt, 8.4kg of peanut protein, 8.4kg of isolated soybean protein, 3.6kg of corn starch, 0.36kg of garlic powder, and 0.018kg of cochineal carmine in the ingredients of group A in the cutting and blending machine to obtain a material of Part A; uniformly cut and blend 60kg of fish, 21 kg of glycerin, 2kg of crystallized sorbitol, 0.1kg of sodium lactate, 0.015kg of composite phosphate, 0.24kg of salt, 8.4kg of peanut protein, 8.4kg of isolated soybean protein, 3.6 kg of corn starch, 0.36kg of garlic powder, 0.06kg of titanium oxide and 0.03kg of β-carotene in the ingredients of Group A in the cutting and blending machine to obtain a material of Part B;
Step 3: respectively roll the material of Part A and the material of Part B into big cakes a square mould, and combine the two big cakes according to a sequence of putting Cake A on top of Cake B, and compact;
Step 4: the same as Step 5 in the second embodiment;
Step 5: uniformly coat a thin layer of the top layer stuffing prepared in Step 4 on a cake formed in Step 3, then spread the red and white granules prepared in Step 1 on the top layer stuffing, and press lightly to realize tight bonding;
Step 6: the same as Step 6 in the first embodiment;
Step 7: the same as Step 7 in the first embodiment.

### Embodiment 4:

### Preparation of raw materials:

Group A: 120kg of mutton, 10kg of chicken breast meat, 43.6kg of glycerin, 5.2kg of crystallized sorbitol, 0.26kg of sodium lactate, 0.04kg of composite phosphate, 0.48kg of salt, 16.8kg of peanut protein, 16.8kg of isolated soy protein, 7.2kg of corn starch, 0.72kg of garlic powder, 0.02kg of cochineal carmine, 0.06kg of titanium oxide, 0.03kg of β-carotene, and 4kg of water.
Group B-1: 5kg of chicken breast meat, 5kg of beef, 3kg of glycerin, 0.3kg of sodium lactate, 0.4kg of sorbitol, 1.4kg of peanut protein, 1 kg of isolated soy protein, 0.6kg of corn protein, 0.003kg of cochineal carmine, 0.25kg of a flavoring agent, 0.04kg of composite phosphate, 0.02kg of sodium polyacrylate;
Group B-2: 3kg of chicken breast meat, 0.48kg of glycerin, 0.03kg of composite phosphate, 1.2kg of flour, 0.0022kg of sodium polyacrylate, 0.0025kg of titanium oxide and 0.225g of potassium sorbate.

### Technological operation:

Step 1: preparation of shredded beef: uniformly mix the raw materials in Group B-1 in a cutting and blending machine, and additionally mix the raw materials uniformly in Group B-2 in the cutting and blending machine, cut the materials of the two parts in the cutting and blending machine for one to two rounds to form a red and white material, roll the material into a big cake in a rectangular mould as thick as 3mm, as wide as 12cm and as long as 42cm, bake the big cake in a baking house at 55°C until the water content is about 30%, cut the baked big cake into shreds for further use;
Step 2: the same as Step 2 in the first embodiment;
Step 3: the same as Step 3 in the first embodiment;
Step 4: the same as Step 4 in the first embodiment;
Step 5: uniformly mix the pizza top layer stuffing prepared in Step 4 and the shredded beef prepared in Step 4, and uniformly coat a layer of the mixed materials on the cake formed in Step 3;
Step 6: the same as Step 6 in the first embodiment;
Step 7: the same as Step 7 in the first embodiment.

The above embodiments are only intended to describe the preferred embodiments of the invention, and shall not be construed to limit the scope of the invention. All modifications and improvements made by those of ordinary skill in the art to the technical solution of the invention without departing from the design spirit of the invention shall fall within the protection scope as defined in the claims of the invention.

## Claims

1. A pizza for a pet, wherein
a pizza flour cake includes the following raw materials in parts by weight:
50 to 160 parts of livestock meat, 0 to 160 parts of fish, 30 to 38 parts of glycerin, 2 to 8 parts of crystallized sorbitol, 1 to 6 parts of sodium lactate, 10 to 20 parts of peanut protein, 12 to 20 parts of isolated soy protein, 5 to 10 parts of corn starch, 1 to 5 parts of cheese powder and 0.4 to 1 part of garlic powder;
a pizza top layer stuffing includes the following raw materials in parts by weight:
80 to 110 parts of chicken breast meat, 12 to 18 parts of glycerin, 2 to 5 parts of crystallized sorbitol, 1 to 4 parts of sodium lactate, 0.2 to 0.8 part of composite phosphate and 20 to 50 parts of water.

2. A pizza for a pet according to claim 1, wherein the livestock meat is at least one of chicken, duck, turkey, rabbit meat, pork, mutton, beef and venison.

3. A pizza for a pet according to claim 1 or 2, wherein the pizza flour cake further includes one or more of the following additives:
0.2 to 2 parts of salt, 0.01 to 2 parts of cochineal carmine, 0.01 to 2 parts of titanium oxide, 0.01 to 2 parts of β-carotene, 0.01 to 2 parts of cheese flavor and 0.01 to 2 parts of milk flavor.

4. A pizza for a pet according to claim 1 or 2, wherein the pizza top layer stuffing further includes one or more of the following raw materials: 2 to 10 parts of air-dried vegetable, 2 to 8 parts of sliced ham, 6 to 15 parts of cheese granules, 6 to 15 parts of red and white shreds and 6 to 15 parts of shredded beef.

5. A pizza for a pet according to claim 4, wherein
a manufacturing method of the sliced ham includes:
raw materials in parts by weight:
2 to 15 parts of chicken breast meat, 1 to 5 parts of beef, 2 to 8 parts of glycerin, 0.1 to 0.5 part of crystallized sorbitol, 2 to 8 parts of peanut protein, 2 to 6 parts of flour, 0.1 to 1 part of isolated soy protein, 0.1 to 0.4 part of composite phosphate, 0.01 to 0.04 part of salt, 0.01 to 0.04 of sodium polyacrylate, 0.001 to 0.005 part of cochineal carmine, 0.001 to 0.005 part of titanium oxide, 0.0001 to 0.001 part of potassium sorbate, and 0.8 to 2 parts of water;
technological operation steps:
weighing 2 to 8 parts of chicken breast meat, 1 to 5 parts of beef, 2 to 4 parts of glycerin, 2 to 5 parts of peanut protein, 2 to 4 parts of flour, 0.1 to 0.6 part of isolated soy protein, 0.05 to 0.1 part of composite phosphate, 0.01 to 0.04 part of salt, 0.0001 to 0.001 part of potassium sorbate, 0.01 to 0.04 part of sodium polyacrylate, 0.001 to 0.005 part of cochineal carmine, and 0.8 to 2 parts of water; cutting and blending uniformly in a cutting and blending machine to form a uniform red material; cutting and blending uniformly other remaining raw materials in the same way to form a white material; cutting the two uniformly cut and blended materials in the cutting and blending machine again for one to two rounds to roughly mix the materials in two colours, kneading the mixed materials into flat strips, freezing the flat strips quickly and then cutting the flat strips into 1 to 5mm thick slices, setting the cut slices into a net in a single layer, baking the net in a baking house at 50°C to 70°C, and taking out the net when the net is baked to a water content of 20% to 40%.

6. A pizza for a pet according to claim 4, wherein
a manufacturing method of the red and white shreds includes:
raw materials in parts by weight:
8 to 14 parts of chicken breast meat, 0.2 to 1 part of corn starch, 2 to 6 parts of glycerin, 0.1 to 0.5 part of sodium lactate, 0.01 to 0.06 part of salt, 0.8 to 2 parts of isolated soy protein, 1 to 2 parts of peanut protein, 0.0005 to 0.001 part of potassium sorbate, 0.04 to 1 part of garlic powder, 0.08 to 0.2 part of cheese powder, 0.001 to 0.003 part of cochineal carmine, 0.002 to 0.008 part of titanium oxide and 0.001 to 0.005 part of β-carotene;
technological operation steps:
uniformly mixing the raw materials except the cochineal carmine, the cheese powder, the titanium oxide, and the β-carotene in a cutting and blending machine, equally dividing the materials into two parts, one of which is added with cochineal carmine and the other one is added with cheese powder, titanium oxide and β-carotene; uniformly cutting and blending the materials in the two parts respectively;
respectively rolling the materials of the two parts into big cakes, then compacting the two big cakes together, baking a combined big bake in a baking house at 50°C to 70°C, taking out the big cake when the water content is 20% to 42% and cutting the big cake into small shreds.

7. A pizza for a pet according to claim 4, wherein
a manufacturing method of the shredded beef includes:
raw materials in parts by weight:
Group 1: 3 to 8 parts of chicken breast meat, 3 to 8 parts of beef, 2 to 6 parts of glycerin, 0.2 to 0.8 part of sodium lactate, 0.3 to 1 part of crystallized sorbitol, 1 to 2 parts of peanut protein, 0.5 to 1.2 parts of isolated soy protein, 0.3 to 0.7 part of corn starch, 0.001 to 0.008 part of cochineal carmine, 0.1 to 0.6 part of a flavoring agent, 0.01 to 0.06 part of composite phosphate and 0.01 to 0.03 part of sodium polyacrylate;
Group 2: 1 to 4 parts of chicken breast meat, 0.3 to 0.6 part of glycerin, 0.01 to 0.05 part of composite phosphate, 1 to 1.6 parts of flour, 0.001 to 0.008 part of sodium polyacrylate, 0.001 to 0.005 part of titanium oxide and 0.0001 to 0.0004 part of potassium sorbate;
technological operation steps:
uniformly mixing the raw materials in Group 1 and the raw materials in Group 2 in a cutting and blending machine respectively, then simultaneously cutting the materials of the two parts in the cutting and blending machine for one to two rounds to form a red and white material, rolling the material into a 2 to 5mm thick big cake, baking the big cake in a baking house at 50°C to 70°C until the water content is about 20% to 38%, and cutting the baked big cake into shreds.

8. A manufacturing method of a pizza for a pet, wherein it includes the following steps:
Step 1: preparing materials for a pizza top layer stuffing: preparing sliced ham, cheese granules, red and white granules or shredded beef for preparing the pizza top layer stuffing;
Step 2: preparing a pizza flour cake, roughly mincing, cutting and blending livestock meat and fish into meat mud, adding glycerin, crystallized sorbitol, sodium lactate, peanut protein, isolated soy protein, corn starch and garlic powder, cutting and blending uniformly, dividing the materials into two equal parts consisting of Part A and Part B, adding cochineal carmine to Part A, and adding cheese powder, β-carotene and titanium oxide to Part B, cutting and blending respectively until the materials are mixed uniformly;
Step 3: moulding the flour cake: respectively rolling the materials of the two parts into cakes, or placing a single layer of a rolled flour cake, or laminating the flour cakes layer by layer and compacting the layers;
Step 4: preparing meat mud: mincing chicken meat into a meat mud, then adding composite phosphate, glycerin, crystallized sorbitol, sodium lactate, and sodium polyacrylate in turn, continuing to cut and blend until a uniform meat mud is formed;
Step 5: preparing the top layer stuffing: uniformly mixing the prepared meat mud with air-dried vegetable or sliced ham, cheese granules, red and white shreds, and shredded beef etc., and coating them on the cakes prepared in Step 3:
Step 6: baking: baking a shaped pizza in a baking house until the water content meets a requirement;
Step 7: cooling and cutting: cooling the baked pizza to below 40°C and cutting the pizza into an appropriate shape, and packaging the pizza to obtain a target product.

9. A manufacturing method of a pizza for a pet according to claim 8, wherein in Step 3 of molding the flour cake, when laminated, the rolled flour cakes are put according to a sequence of Cake A-Cake B or Cake B-Cake A-Cake B.

10. A manufacturing method of a pizza for a pet according to claim 8, wherein the temperature of the baking house in the baking process of Step 6 is 50°C to 80°C, and the water content of the finished baked product is below 40%.
